# FASCICULE DE BREVET EUROPEEN

(11) **EP 3 187 469 B1**
(45) Date de publication et mention de la délivrance du brevet: **15.07.2020**
(21) Numéro de dépôt: 17156399.2
(22) Date de dépôt: 07.12.2012
(51) Int. Cl.: C03B 11/10, C03B 11/12

(54) **PROCÉDÉ ET DISPOSITIF DE FABRICATION D'UN ARTICLE EN VERRE CREUX**
VERFAHREN UND VORRICHTUNG ZUR HERSTELLUNG EINES ARTIKELS AUS HOHLGLAS
METHOD AND DEVICE FOR MANUFACTURING A HOLLOW GLASS ITEM

(30) Priorité: 09.12.2011 FR 1161398
(43) Date de publication de la demande: 05.07.2017
(62) Demande divisionnaire de: 12196161.9
(73) Titulaire: Pochet du Courval, 75010 Paris (FR)
(72) Inventeur: LEQUIEN, Jany, 76340 Hodeng au Bosc (FR); FROISSART, Pascal, 80340 Neuville Coppegueule (FR); BALITEAU, Sébastien, 80220 Boutencourt (FR)
(74) Mandataire: Derambure Conseil

(56) Documents cités:
- DE-B3-102006 058 770
- JP-A- 2003 095 671
- US-A- 2 394 116
- US-A- 4 072 491
- US-A1- 2003 026 924

## Description

La présente invention concerne un procédé et un dispositif de fabrication d'un article en verre creux comprenant notamment un fond et des parois latérales, comme par exemple un flacon ou un pot.

Les articles en verre creux peuvent être fabriqués selon plusieurs procédés.

L'un de ces procédés consiste à déposer dans une empreinte d'un moule au moins une goutte de verre, également appelée paraison. Cette empreinte a une forme interne qui correspond sensiblement à la forme externe de l'article.

Ensuite, un poinçon est introduit dans l'empreinte du moule de façon à donner à l'article sensiblement sa forme définitive. Le document US 2003/026924 décrit un dispositif muni de deux blocs ayant un rôle équivalent à un tel poinçon.

A titre d'exemple, l'article peut avoir une forme extérieure rectangulaire ou carrée et une forme intérieure conique par l'intermédiaire du poinçon. Ainsi, JP 2003/095,671 décrit un article en verre dont la forme intérieure est conique non régulière, étant étagée en gradins.

L'invention concerne plus particulièrement les procédés et dispositifs de fabrication d'un article en verre creux, comme par exemple un flacon ou un pot, l'article en verre comprenant un corps déterminant un contenant délimité par une paroi et un fond, le corps comportant une partie supérieure opposée au fond et munie d'une bague.

Or, certains utilisateurs de ce type d'article en verre, notamment dans le domaine de la parfumerie ou de la cosmétique, cherchent à personnaliser ces articles en réalisant des décors en relief et/ou en creux à l'intérieur, rappelant ou suggérant la marque et/ou le produit contenu dans les articles. Le ou les décor(s) à l'intérieur peuvent être indépendant(s) de la forme de l'article et ces motifs peuvent avoir toutes les formes désirées.

L'invention a pour but de proposer un procédé et un dispositif de fabrication d'un article en verre creux, comme par exemple un flacon ou un pot, le flacon ou pot en verre comprenant un corps déterminant un contenant délimité par une paroi et un fond, le corps comportant une partie supérieure opposée au fond et munie d'une bague, permettant de réaliser ce type d'intervention à l'intérieur de ces articles.

L'invention a donc pour objet un procédé de fabrication d'un flacon ou un pot en verre creux, le flacon ou pot en verre comprenant un corps déterminant un contenant délimité par une paroi et un fond, le corps comportant une partie supérieure opposée au fond et munie d'une bague, qui comprend les étapes suivantes :
- on dépose dans une empreinte d'un moule, qui comporte à sa partie supérieure un orifice d'introduction d'au moins une goutte de verre, cet orifice étant obturé par un fond contre lequel est formé le fond du flacon ou pot, qui comporte à sa partie inférieure un orifice pour le passage du poinçon et, au-dessous de l'orifice, un moule de bague, au moins une goutte de verre,
- on introduit dans l'empreinte un poinçon comportant au moins un motif en relief et/ou en creux,
- on forme au moyen de ce poinçon le flacon ou pot en verre et simultanément on imprime sur une face interne d'au moins une paroi dudit flacon ou pot au moins un motif en relief et/ou en creux formé par l'au moins un motif en relief et/ou en creux, le moule de bague formant la bague,
- on retire le poinçon de l'empreinte du moule, et
- on démoule le flacon ou pot en verre comportant ledit au moins un motif interne en relief et/ou en creux.

Selon d'autres aspects avantageux de l'invention, le procédé comprend une ou plusieurs des caractéristiques suivantes, prises isolément ou suivant toutes les combinaisons techniquement possibles :
- le moule de bague est muni d'un orifice central pour le passage du poinçon ;
- le moule de bague porte intérieurement un manchon de guidage du poinçon, et on déplace le poinçon entre une position passive dans laquelle la paroi d'extrémité du poinçon obture l'orifice central et une position active dans laquelle le poinçon est en saillie dans l'empreinte du moule afin de former le flacon ou pot.

L'invention a aussi pour objet un poinçon de formage direct d'un article en verre creux, comme par exemple un flacon ou un pot, caractérisé en ce qu'il comprend un corps comprenant une partie d'extrémité de forme générale tronconique, la partie d'extrémité comportant sur au moins une face latérale externe au moins un motif en relief et/ou en creux.

Suivant d'autres aspects avantageux de l'invention, le poinçon comprend une ou plusieurs des caractéristiques suivantes, prises isolément ou suivant toutes les combinaisons techniquement possibles :
- le motif en relief et/ou en creux présente une forme localement en contre-dépouille,
- la partie d'extrémité comporte un angle de dépouille compris entre 2 degrés et 15 degrés, de préférence de l'ordre de 5 degrés.

L'invention a aussi pour objet un dispositif de fabrication d'un article en verre creux, comme par exemple un flacon ou un pot, le flacon ou pot en verre comprenant un corps déterminant un contenant délimité par une paroi et un fond, le corps comportant une partie supérieure opposée au fond et munie d'une bague, pour la mise en œuvre du procédé tel que précédemment mentionné, qui comprend :
- un moule comportant une empreinte de forme correspondant sensiblement à la forme extérieure du flacon ou pot en verre, le moule comportant à sa partie supérieure un orifice d'introduction d'au moins une goutte de verre, cet orifice étant obturé par un fond contre lequel est formé le fond du flacon ou pot, le moule comportant à sa partie inférieure un orifice pour le passage du poinçon et, au-dessous de l'orifice, un moule de bague adapté pour former la bague,
- un moyen de déposer dans l'empreinte au moins une goutte de verre, et
- un poinçon qui comprend un corps comportant sur au moins une face latérale externe au moins un motif en relief et/ou en creux, le poinçon étant déplaçable entre une position passive à l'extérieur de l'empreinte et une position active à l'intérieur de ladite empreinte.

Suivant d'autres aspects avantageux de l'invention, le dispositif de fabrication comprend une ou plusieurs des caractéristiques suivantes, prises isolément ou suivant toutes les combinaisons techniquement possibles :
- le motif en relief et/ou en creux présente une forme localement en contre-dépouille propre à conférer une forme en contre-dépouille complémentaire au verre destiné à former le flacon ou pot en verre ;
- le corps du poinçon comprend une partie d'extrémité de forme générale tronconique, la partie d'extrémité comportant sur au moins une face latérale externe au moins le motif en relief et/ou en creux ;
- la partie d'extrémité se termine par une paroi d'extrémité ;
- le corps du poinçon comprend une partie d'extrémité de section progressivement décroissante vers une paroi d'extrémité ;
- la partie d'extrémité comporte sur au moins une face latérale externe au moins le motif en relief et/ou en creux ;
- la paroi d'extrémité comporte également un motif en relief et/ou en creux ;
- le corps du poinçon comporte une forme extérieure rectangulaire, carrée ou ovoïde ;
- la partie d'extrémité comporte un angle de dépouille compris entre 2 degrés et 15 degrés, de préférence un angle de dépouille compris entre 2 degrés et 10 degrés, et de manière encore plus préférée un angle de dépouille de l'ordre de 5 degrés par rapport à l'axe de la partie d'extrémité ;
- le poinçon comporte intérieurement un élément de refroidissement.

Les caractéristiques et avantages de l'invention apparaîtront au cours de la description qui va suivre, donnée à titre d'exemple et faite en référence aux dessins annexés, sur lesquels :
- la figure 1 est une vue schématique en élévation d'un article en verre creux, comme par exemple un pot, obtenu par le procédé de fabrication, conforme à l'invention,
- la figure 2 est une vue en perspective d'un poinçon de formage direct, conforme à l'invention,
- la figure 3 est une vue schématique en perspective et en coupe verticale d'un dispositif de fabrication d'un article en verre creux avec le poinçon de formage en position passive, et
- la figure 4 est une vue schématique en perspective et en coupe verticale du dispositif de fabrication avec le poinçon de formage en position active.

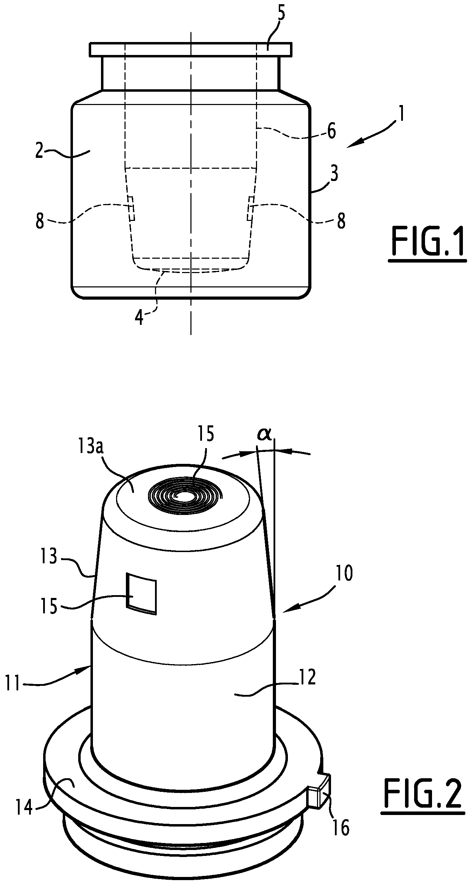

Sur la figure 1, on a représenté schématiquement un article en verre creux, comme par exemple un pot, désigné par la référence générale 1 et qui présente, dans cet exemple, une forme générale cylindrique. Cet article 1 comporte un corps 2 creux déterminant un contenant délimité par une paroi cylindrique 3 et un fond 4. Le corps 2 comporte une partie supérieure opposée au fond 4, munie d'une bague 5.

Dans l'exemple de réalisation représenté à la figure 1, le creux interne du corps 2 de l'article 1 comporte une face interne 6 et ce creux présente une forme générale sensiblement tronconique.

Le creux du corps 2 peut avoir toute autre forme, comme par exemple carrée, rectangulaire ou ovale. Dans le cas d'un creux présentant une forme carrée ou rectangulaire, l'article en verre 1 présente plusieurs parois latérales comportant chacune une face interne.

Ainsi que montré à la figure 1, la face interne 6 de la paroi 3 du corps 2 comporte au moins un motif 8 en relief et/ou en creux imprimé dans le verre de l'article 1.

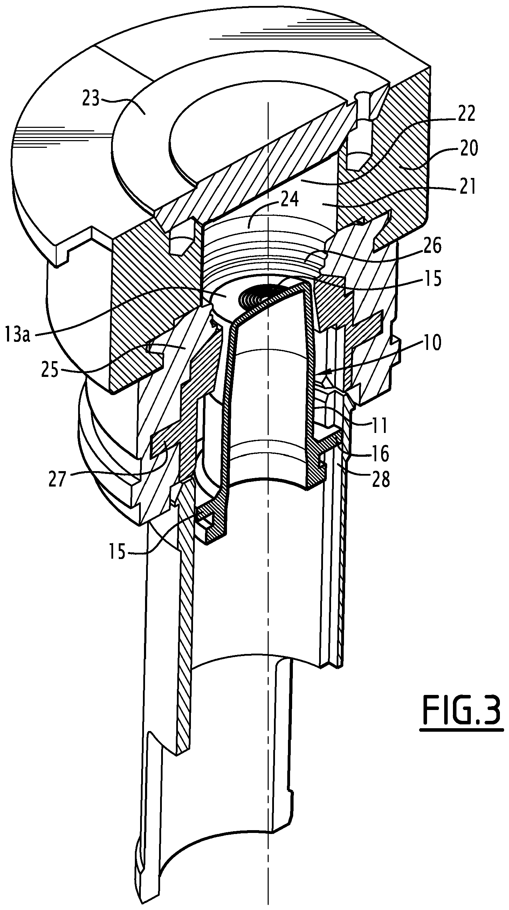

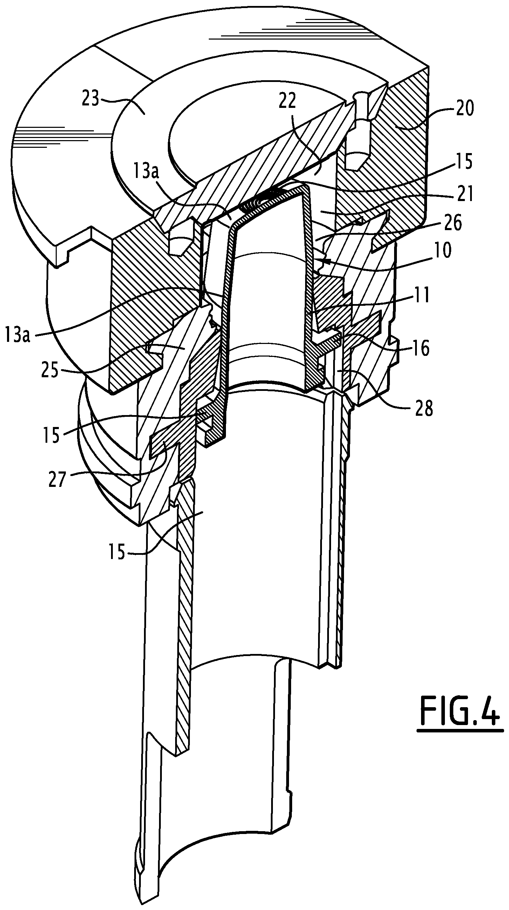

L'article en verre 1 est formé par un poinçon 10 représenté à la figure 2 et dans un dispositif de fabrication désigné par la référence générale 20 et représenté sur les figures 3 et 4.

D'une manière générale, le corps 11 du poinçon 10 comporte une forme extérieure correspondant sensiblement à la forme du creux à obtenir dans l'article 1. Cette forme peut être rectangulaire, carrée ou ovoïde ou toute autre forme appropriée.

Le corps 11 du poinçon 10 comporte, dans l'exemple de réalisation représenté à la Fig. 2, une première partie 12 sensiblement cylindrique et une seconde partie 13 dite partie d'extrémité, prolongeant la première partie 12.

La partie d'extrémité 13 est de section progressivement décroissante vers une paroi d'extrémité 13a. La partie d'extrémité 13 présente une forme générale tronconique se terminant par la paroi d'extrémité 13a.

Cette partie d'extrémité 13 présente une forme générale comportant un angle de dépouille α compris entre 2 degrés et 15 degrés, de préférence un angle de dépouille α compris entre 2 degrés et 10 degrés, et de manière encore plus préférée un angle de dépouille α de l'ordre de 5 degrés par rapport à l'axe de la partie d'extrémité 13.

La partie d'extrémité 13 du corps 11 du poinçon 10 comporte sur sa face latérale externe au moins un motif 15 en relief et/ou en creux destiné à former ledit au moins un motif 8 en relief et/ou en creux sur la face interne 6 de la paroi 3 lors du formage de l'article 1. Un motif 15 en relief et/ou en creux peut également être prévu sur la paroi d'extrémité 13a du corps 11.

Par « en relief et/ou en creux », on entend que le motif 15 est en relief et/ou en creux, ou bien présente au moins un relief et au moins un creux.

Le motif 15 en relief et/ou en creux présente une forme localement en contre-dépouille, c'est-à-dire au moins une surface dont la normale est orientée à l'opposé de la paroi d'extrémité 13a.

Ainsi, localement, au niveau de la contre-dépouille, le motif est de section progressivement croissante vers la paroi d'extrémité 13a.

Lorsque l'ébauche d'un article en verre fondu vient surmouler le poinçon 10, l'ébauche présente à l'endroit du motif 15 une forme en contre-dépouille complémentaire de celle du motif 15. Malgré la forme en contre-dépouille complémentaire de l'ébauche, le démoulage d'une telle ébauche reste possible, car l'ébauche présente une certaine élasticité, du fait de la malléabilité du verre fondu.

Le motif 15 en relief et/ou en creux se superpose à la forme générale tronconique de la partie d'extrémité 13.

Le corps 11 du poinçon 10 comporte une bague de guidage 14.

Le dispositif de fabrication de l'article en verre 1 comprend, comme montré sur les figures 3 et 4, un moule 20 comportant une empreinte 21 de forme correspondant sensiblement à la forme extérieure de l'article 1 en verre.

De manière habituelle, le moule 20 comporte à sa partie supérieure un orifice 22 d'introduction d'au moins une goutte de verre. Cet orifice 22 est obturé par un fond 23 contre lequel est formé le fond 4 de l'article 1. Le moule 20 comporte à sa partie inférieure un orifice 24 pour le passage du poinçon 10, ainsi qu'on le verra ultérieurement.

Le moule 20 comporte également au-dessous de l'orifice 24, un moule de bague 25 destiné à former la bague 5 de l'article 1. Ce moule de bague 25 est muni d'un orifice central 26 pour le passage du poinçon 10. Le moule de bague 25 porte intérieurement un manchon 27 de guidage du poinçon 10 déplaçable entre une position passive représentée à la figure 3 et dans laquelle la paroi d'extrémité 13a du poinçon 10 obture l'orifice central 26 et une position active représentée à la figure 4 et dans laquelle le poinçon 10 est en saillie dans l'empreinte 21 du moule 20 afin de former l'article 1.

Le manchon de guidage 27 comporte intérieurement une rainure verticale 28 coopérant avec un ergot 16 ménagé à la périphérie de la bague 14 du poinçon 10 et destinée à positionner ce poinçon 10 pour imprimer ledit au moins un motif 15 en relief et/ou en creux à l'endroit choisi sur la face interne 6 de la paroi 3 de l'article 1.

Le poinçon 10 peut comporter intérieurement un élément de refroidissement, comme par exemple une buse, non représentée.

Pour réaliser l'article en verre 1, on procède de la façon suivante.

Tout d'abord et après avoir retiré le fond 23 du moule 20, on dépose dans l'empreinte 21 au moins une goutte de verre fondu, cette empreinte 21 étant obturée à sa partie inférieure par la paroi d'extrémité 13a du poinçon 10, comme montré à la figure 3.

Ensuite, on replace le fond 23 sur le moule 20 et on actionne par des moyens appropriés de type connu, le poinçon 10 qui se déplace entre la position passive représentée à la figure 3 et la position active représentée à la figure 4 et dans laquelle le poinçon 10 est en saillie à l'intérieur de l'empreinte 21 du moule 20.

Ainsi, le poinçon 10 en pénétrant dans l'empreinte 21 forme l'article en verre 1 en lui donnant sa forme extérieure et sa forme intérieure. Simultanément, le poinçon 10 imprime sur une face intérieure 6 de la paroi 3 du flacon 1 au moins un motif 8 en relief et/ou en creux par l'intermédiaire d'au moins un motif 15 en relief et/ou en creux ménagé sur le corps 11 du poinçon 10.

Dans l'exemple de réalisation des figures 1 et 2, le poinçon 10 imprime sur une face latérale intérieure de la paroi 3 du flacon 1 au moins un motif 8 en relief et/ou en creux par l'intermédiaire d'au moins un motif 15 en relief et/ou en creux ménagé sur la face latérale externe de la partie d'extrémité 13 du corps 11 du poinçon 10.

Lors de l'impression sur une face latérale intérieure de la paroi 3 du flacon 1 d'au moins un motif 8 en relief et/ou en creux, le motif 15 confère une forme de contre-dépouille au verre fondu destiné à former l'article en verre 1. Cette forme en contre-dépouille constitue l'ébauche du motif 8 en relief et/ou en creux de l'article en verre 1.

Bien évidemment, les formes extérieure et intérieure du corps 2 de l'article en verre 1 peuvent être différentes de celles représentées à la figure 1.

Ensuite, on retire le poinçon 10 en le ramenant dans sa position passive par un déplacement axial et on démoule l'article en verre 1. On constate que lors du retrait du poinçon 10, l'article en verre se déforme élastiquement pour permettre le passage du motif 15, puis l'article en verre reprend sa forme laissant apparaître le motif 8.

Le dispositif selon l'invention permet en une seule opération de former l'article en verre creux et d'imprimer sur une face interne d'au moins une paroi dudit article au moins un motif en relief et/ou en creux.

## Revendications

1. Procédé de fabrication d'un flacon ou un pot creux, le flacon ou pot en verre comprenant un corps (2) déterminant un contenant délimité par une paroi (3) et un fond (4), le corps (2) comportant une partie supérieure opposée au fond (4) et munie d'une bague (5), qui comprend les étapes suivantes :
- on dépose dans une empreinte (21) d'un moule (20), qui comporte à sa partie supérieure un orifice (22) d'introduction d'au moins une goutte de verre, cet orifice (22) étant obturé par un fond (23) contre lequel est formé le fond (4) du flacon ou pot, qui comporte à sa partie inférieure un orifice (24) pour le passage du poinçon (10) et, au-dessous de l'orifice (24), un moule de bague (25), au moins une goutte de verre,
- on introduit dans l'empreinte (21) du moule (20) un poinçon (10) comportant au moins un motif (15) en relief et/ou en creux,
- on forme au moyen de ce poinçon (10) le flacon ou pot en verre et simultanément on imprime sur une face interne (6) d'au moins une paroi (3) dudit flacon ou pot au moins un motif (8) en relief et/ou en creux formé par l'au moins un motif (15) en relief et/ou en creux, le moule de bague (25) formant la bague (5),
- on retire le poinçon (10) de l'empreinte (21) du moule (20), et
- on démoule le flacon ou pot en verre comportant ledit motif (8) interne en relief et/ou en creux.

2. Procédé de fabrication d'un flacon ou un pot en verre creux selon la revendication 1, dans lequel le moule de bague est muni d'un orifice central (26) pour le passage du poinçon.

3. Procédé de fabrication d'un flacon ou un pot en verre creux selon la revendication 2, dans lequel le moule de bague (25) porte intérieurement un manchon (27) de guidage du poinçon (10), et dans lequel on déplace le poinçon (10) entre une position passive dans laquelle la paroi d'extrémité (13a) du poinçon (10) obture l'orifice central (26) et une position active dans laquelle le poinçon (10) est en saillie dans l'empreinte (21) du moule (20) afin de former le flacon ou pot.

4. Dispositif de fabrication d'un flacon ou un pot en verre creux, le flacon ou pot en verre comprenant un corps (2) déterminant un contenant délimité par une paroi (3) et un fond (4), le corps (2) comportant une partie supérieure opposée au fond (4) et munie d'une bague (5), pour la mise en oeuvre du procédé selon la revendication 1, **caractérisé en ce qu'**il comprend :
- un moule (20) comportant une empreinte (21) de forme correspondant sensiblement à la forme extérieure du flacon ou pot en verre, le moule (20) comportant à sa partie supérieure un orifice (22) d'introduction d'au moins une goutte de verre, cet orifice (22) étant obturé par un fond (23) contre lequel est formé le fond (4) du flacon ou pot, le moule (20) comportant à sa partie inférieure un orifice (24) pour le passage du poinçon (10) et, au-dessous de l'orifice (24), un moule de bague (25) adapté pour former la bague (5),
- un moyen de déposer dans l'empreinte (21) au moins une goutte de verre, et
- un poinçon (10) qui comprend un corps (11) comportant sur au moins une face latérale externe au moins un motif (15) en relief et/ou en creux, le poinçon (10) étant déplaçable entre une position passive à l'extérieur de l'empreinte (21) et une position active à l'intérieur de cette empreinte (21).

5. Dispositif de fabrication d'un flacon ou un pot en verre creux selon la revendication 4, dans lequel le corps (11) du poinçon comprend une partie d'extrémité (13) de forme générale tronconique, la partie d'extrémité (13) comportant sur au moins une face latérale externe au moins le motif (15) en relief et/ou en creux.

6. Dispositif de fabrication d'un flacon ou un pot en verre creux selon la revendication 5, dans lequel la partie d'extrémité (13) se termine par une paroi d'extrémité (13a).

7. Dispositif de fabrication d'un flacon ou un pot en verre creux selon la revendication 4, dans lequel le corps (11) du poinçon comprend une partie d'extrémité (13) de section progressivement décroissante vers une paroi d'extrémité (13a).

8. Dispositif de fabrication d'un flacon ou un pot en verre creux selon la revendication 7, dans lequel la partie d'extrémité (13) comporte sur au moins une face latérale externe au moins le motif (15) en relief et/ou en creux.

9. Dispositif de fabrication d'un flacon ou un pot en verre creux selon l'une des revendications 6 à 8, dans lequel la paroi d'extrémité (13a) comporte également un motif (15) en relief et/ou en creux.

10. Dispositif de fabrication d'un flacon ou un pot en verre creux selon l'une quelconque des revendications 4 à 9, dans lequel le corps (11) du poinçon (10) comporte une forme extérieure rectangulaire, carrée ou ovoïde.

11. Dispositif de fabrication d'un flacon ou un pot en verre creux selon l'une des revendications 4 à 10, **caractérisé en ce que** la partie d'extrémité (13) comporte un angle de dépouille (a) compris entre 2 degrés et 15 degrés, de préférence un angle de dépouille (α) compris entre 2 degrés et 10 degrés, et de manière encore plus préférée un angle de dépouille (α) de l'ordre de 5 degrés par rapport à l'axe de la partie d'extrémité (13).

12. Dispositif de fabrication d'un flacon ou un pot en verre creux selon l'une des revendications 4 à 11, dans lequel le poinçon (10) comporte intérieurement un élément de refroidissement.

## Patentansprüche

1. Verfahren zur Herstellung einer hohlen Flasche oder eines hohlen Behälters, wobei die Glasflasche oder der Glasbehälter einen Körper (2) aufweist, der ein Behältnis definiert, das durch eine Wand (3) und einen Boden (4) begrenzt ist, wobei der Körper (2) einen oberen Teil aufweist, der dem Boden (4) gegenüberliegt und mit einem Ring (5) versehen ist, wobei das Verfahren die folgenden Schritte umfasst:
- Absetzen in einem Hohlraum (21) einer Form (20), die in ihrem oberen Teil eine Öffnung (22) zum Einführen wenigstens eines Glastropfens aufweist, wobei diese Öffnung (22) durch einen Boden (23) verschlossen ist, gegen den der Boden (4) der Flasche oder des Behälters geformt wird, die in ihrem unteren Teil eine Öffnung (24) für den Durchlass des Stempels (10) und unterhalb der Öffnung (24) eine Ringform (25), wenigstens einen Glastropfen aufweist,
- Einführen eines Stempels (10) mit wenigstens einem erhabenen und/oder vertieften Muster (15) in den Hohlraum (21) der Form (20),
- Formen der Glasflasche oder des Glasbehälters mit Hilfe dieses Stempels (10) und gleichzeitig Drucken wenigstens eines erhabenen und/oder vertieften Musters (8), das von dem wenigstens einen erhabenen und/oder vertieften Muster (15) gebildet wird, auf eine Innenfläche (6) wenigstens einer Wand (3) der Flasche oder des Behälters, wobei die Ringform (25) den Ring (5) bildet,
- Entnehmen des Stempels (10) aus dem Formhohlraum (21) der Form (20), und
- Entnehmen der Glasflasche oder des Glasbehälters welche das erhabene oder vertiefte Innenmuster (8) aufweisen, aus der Form.

2. Verfahren zur Herstellung einer Flasche oder eines Behälters aus Hohlglas nach Anspruch 1, wobei die Ringform mit einer zentralen Öffnung (26) für den Durchlass des Stempels versehen wird.

3. Verfahren zur Herstellung einer Flasche oder eines Behälters aus Hohlglas nach Anspruch 2, wobei die Ringform (25) innen eine Hülse (27) zur Führung des Stempels (10) trägt und wobei der Stempel (10) zwischen einer passiven Position, in der die Endwand (13a) des Stempels (10) die zentrale Öffnung (26) verschließt, und einer aktiven Position, in der der Stempel (10) in den Hohlraum (21) der Form (20) hineinragt, bewegt wird, um die Flasche oder den Behälter zu formen.

4. Verfahren zur Herstellung einer Flasche oder eines Behälters aus Hohlglas, wobei die Glasflasche oder der Glasbehälter einen Körper (2) aufweist, der einen Behälter definiert, der durch eine Wand (3) und einen Boden (4) begrenzt ist, wobei der Körper (2) einen oberen Teil aufweist, der dem Boden (4) gegenüberliegt und mit einem Ring (5) versehen ist, zur Durchführung des Verfahrens nach Anspruch 1, **dadurch gekennzeichnet, dass** es umfasst:
- eine Form (20), umfassend einen Hohlraum (21) deren Gestalt im Wesentlichen der äußeren Gestalt der Glasflasche oder des Glasbehälters entspricht, wobei die Form (20) in ihrem oberen Teil eine Öffnung (22) zum Einführen wenigstens eines Glastropfens aufweist, wobei diese Öffnung (22) durch einen Boden (23) verschlossen ist, gegen den der Boden (4) der Flasche oder des Behälters geformt ist, wobei die Form (20) in ihrem unteren Teil eine Öffnung (24) für den Durchlass des Stempels (10) aufweist, und unterhalb der Öffnung (24) eine Ringform (25), die geeignet ist, den Ring (5) zu bilden,
- ein Mittel zum Ablegen wenigstens eines Glastropfens in dem Hohlraum (21), und
- einen Stempel (10), der einen Körper (11) aufweist, der auf wenigstens einer äußeren Seitenfläche wenigstens ein erhabenes und/oder vertieftes Muster (15) aufweist, wobei der Stempel (10) zwischen einer passiven Position außerhalb des Hohlraums (21) und einer aktiven Position im Inneren dieses Hohlraums (21) beweglich ist.

5. Verfahren zur Herstellung einer Flasche oder eines Behälters aus Hohlglas nach Anspruch 4, wobei der Körper (11) des Stempels einen Endabschnitt (13) von allgemein kegelstumpfförmiger Form aufweist, wobei der Endabschnitt (13) auf wenigstens einer äußeren Seitenfläche wenigstens das erhabene und/oder vertiefte Muster (15) aufweist.

6. Verfahren zur Herstellung einer Flasche oder eines Behälters aus Hohlglas nach Anspruch 5, wobei der Endabschnitt (13) in einer Endwand (13a) endet.

7. Verfahren zur Herstellung einer Flasche oder eines Behälters aus Hohlglas nach Anspruch 4, wobei der Körper (11) des Stempels einen Endabschnitt (13) mit progressiv abnehmendem Querschnitt zu einer Endwand (13a) hin aufweist.

8. Verfahren zur Herstellung einer Flasche oder eines Behälters aus Hohlglas nach Anspruch 7, wobei der Endabschnitt (13) auf wenigstens einer äußeren Seitenfläche wenigstens das erhabene und/oder vertiefte Muster (15) aufweist.

9. Verfahren zur Herstellung einer Flasche oder eines Behälters aus Hohlglas nach einem der Ansprüche 6 bis 8, wobei die Endwand (13a) auch ein erhabenes und/oder vertieftes Muster (15) aufweist.

10. Verfahren zur Herstellung einer Flasche oder eines Behälters aus Hohlglas nach einem der Ansprüche 4 bis 9, wobei der Körper (11) des Stempels (10) eine rechteckige, quadratische oder ovale äußere Form hat.

11. Verfahren zur Herstellung einer Flasche oder eines Behälters aus Hohlglas nach einem der Ansprüche 4 bis 10, **dadurch gekennzeichnet, dass** der Endabschnitt (13) einen Anstellwinkel (a) zwischen 2 Grad und 15 Grad, vorzugsweise einen Anstellwinkel (a) zwischen 2 Grad und 10 Grad, und noch stärker bevorzugt einen Anstellwinkel (a) in der Größenordnung von 5 Grad in Bezug auf die Achse des Endabschnitts (13) aufweist.

12. Verfahren zur Herstellung einer Flasche oder eines Behälters aus Hohlglas nach einem der Ansprüche 4 bis 11, wobei der Stempel (10) im Inneren ein Kühlelement aufweist.

## Claims

1. A method of manufacturing a bottle or a hollow jar, the glass bottle or jar comprising a body (2) defining a container delimited by a wall (3) and a bottom (4), the body (2) comprising an upper part opposite the bottom (4) and provided with a ring (5), which comprises the following steps:
- at least one glass drop is placed in a mould cavity (21) of a mould (20), which has in its upper part an opening (22) for the introduction of at least one glass drop, this opening (22) being closed by a base (23) against which the bottom (4) of the bottle or jar is formed, which has in its lower part an opening (24) for the passage of the punch (10) and, below the opening (24), a ring mould (25),
- a punch (10) having at least one raised and/or recessed pattern (15) is inserted into the cavity (21) of the mould (20),
- the glass bottle or jar is formed by means of this punch (10) and simultaneously at least one raised and/or recessed pattern (8) formed by the at least one raised and/or recessed pattern (15) is printed on an inner face (6) of at least one wall (3) of said bottle or jar, the ring mould (25) forming the ring (5),
- the punch (10) is removed from the mould cavity (21) of the mould (20), and
- the glass bottle or jar having said internal raised and/or recessed pattern (8) is removed from the mould.

2. A method of manufacturing a hollow glass bottle or jar according to claim 1, in which the ring mould is provided with a central opening (26) for the passage of the punch.

3. A method of manufacturing a hollow glass bottle or jar according to claim 2, in which the ring mould (25) carries internally a sleeve (27) for guiding the punch (10), and in which the punch (10) is moved between a passive position in which the end wall (13a) of the punch (10) closes off the central opening (26) and an active position in which the punch (10) projects into the cavity (21) of the mould (20) in order to form the bottle or jar.

4. Device for manufacturing a hollow glass bottle or jar, the glass bottle or jar comprising a body (2) defining a container delimited by a wall (3) and a bottom (4), the body (2) comprising an upper part opposite the bottom (4) and provided with a ring (5), for carrying out the process according to claim 1, **characterized in that** it comprises :
- a mould (20) having a cavity (21) with a shape corresponding substantially to the external shape of the glass bottle or jar, the mould (20) having at its upper part an opening (22) for introducing at least one drop of glass, this opening (22) being closed by a base (23) against which the bottom (4) of the bottle or jar is formed, the mould (20) comprising at its lower part an opening (24) for the passage of the punch (10) and, below the opening (24), a ring mould (25) adapted to form the ring (5),
- a means for depositing at least one glass drop in the cavity (21), and
- a punch (10) which comprises a body (11) having on at least one outer side face at least one raised and/or recessed pattern (15), the punch (10) being movable between a passive position outside the cavity (21) and an active position inside this cavity (21).

5. A device for manufacturing a hollow glass bottle or jar according to claim 4, in which the body (11) of the punch comprises a generally frustoconical end portion (13), the end portion (13) having on at least one external lateral face at least the raised and/or recessed pattern (15).

6. A device for manufacturing a hollow glass bottle or jar according to claim 5, wherein the end portion (13) terminates in an end wall (13a).

7. A device for manufacturing a hollow glass bottle or jar according to claim 4, wherein the body (11) of the punch comprises an end portion (13) of progressively decreasing cross-section towards an end wall (13a).

8. A device for manufacturing a hollow glass bottle or jar according to claim 7, in which the end portion (13) has on at least one outer side face at least the raised and/or recessed pattern (15).

9. A device for producing a hollow glass bottle or jar according to one of claims 6 to 8, wherein the end wall (13a) also has a raised and/or recessed pattern (15).

10. A device for producing a hollow glass bottle or jar according to any one of claims 4 to 9, wherein the body (11) of the punch (10) has a rectangular, square or ovoid outer shape.

11. A device for producing a hollow glass bottle or jar according to one of claims 4 to 10, **characterized in that** the end portion (13) has a draft angle (α) of between 2 degrees and 15 degrees, preferably a draft angle (α) of between 2 degrees and 10 degrees, and even more preferably a draft angle (α) of approximately of 5 degrees with respect to the axis of the end portion (13).

12. A device for producing a hollow glass bottle or jar according to one of claims 4 to 11, wherein the punch (10) has a cooling element inside.
